# FASCICULE DE BREVET EUROPEEN

(11) **EP 3 826 158 B1**
(45) Date de publication et mention de la délivrance du brevet: **29.03.2023**
(21) Numéro de dépôt: 20206608.0
(22) Date de dépôt: 10.11.2020
(51) Int. Cl.: H02M 1/38, H02M 1/00, H02M 1/12

(54) **COMMANDE D'INTERRUPTEURS**
SCHALTERSTEUERUNG
SWITCH CONTROL

(30) Priorité: 25.11.2019 FR 1913169
(43) Date de publication de la demande: 26.05.2021
(73) Titulaire: Commissariat à l'Energie Atomique et aux Energies Alternatives, 75015 Paris (FR)
(72) Inventeur: LEFEVRE, Guillaume, 38054 Grenoble Cedex 9 (FR); PIQUET-BOISSON, Guillaume, 38054 Grenoble Cedex 9 (FR)
(74) Mandataire: Cabinet Beaumont

(56) Documents cités:
- WO-A1-01/22585
- YOUNG UK HONG ET AL: "Optimum efficiency-tracking gate driver using adaptive deadtime control for single chip DC-DC converter", POWER ELECTRONICS SPECIALISTS CONFERENCE, 2006. PESC '06. 37TH IEEE JEJU, KOREA 18-22 JUNE 2006, PISCATAWAY, NJ, USA,IEEE, 18 juin 2006 (2006-06-18), pages 1-5, XP010945077, DOI: 10.1109/PESC.2006.1711783 ISBN: 978-0-7803-9716-3
- ABU-QAHOUQ J A ET AL: "Maximum efficiency point tracking (MEPT) method and dead time control", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20 juin 2004 (2004-06-20), page 3700, XP010738305, DOI: 10.1109/PESC.2004.1355130 ISBN: 978-0-7803-8399-9
- SUNGWOO LEE ET AL: "Robust and efficient synchronous buck converter with near-optimal dead-time control", SOLID-STATE CIRCUITS CONFERENCE DIGEST OF TECHNICAL PAPERS (ISSCC), 2011 IEEE INTERNATIONAL, IEEE, 20 février 2011 (2011-02-20), pages 392-394, XP032013785, DOI: 10.1109/ISSCC.2011.5746366 ISBN: 978-1-61284-303-2

## Description

### Domaine technique

La présente description concerne de façon générale les dispositifs électroniques, et plus particulièrement les convertisseurs à découpage.

### Technique antérieure

On utilise des convertisseurs à découpage pour fournir une tension et/ou un courant à partir d'une alimentation ayant des valeurs de tension/courant différents des valeurs des tension/courant à fournir. L'alimentation peut être une source de tension/courant continue, telle qu'une batterie ou un capteur photovoltaïque, ou alternative, telle qu'un alternateur ou un réseau de distribution d'électricité. La tension et/ou le courant peuvent être fournis à une charge sous forme continue, par exemple à une batterie à charger, ou sous forme alternative, par exemple à un moteur ou à un réseau de distribution d'électricité.

Les convertisseurs à découpage comprennent typiquement une ou plusieurs cellules de commutation. Chaque cellule de commutation comprend deux interrupteurs commandés (par exemple des transistors) ou non commandés (par exemple de type Diode), reliés électriquement en série. Les interrupteurs peuvent passer alternativement de l'état passant (fermé) à l'état bloqué (ouvert) à une fréquence dite fréquence de découpage. Les interrupteurs sont commandés en opposition, c'est à dire de sorte que lorsque l'un des interrupteurs est passant, l'autre est bloqué. Les documents WO01/22585, XP010945077, XP010738305 et XP032013785 décrivent des exemples de solutions de contrôle adaptatif de temps mort dans des circuits de commutation.

### Résumé de l'invention

Il existe un besoin, en particulier pour des convertisseurs connus recevant et/ou fournissant des tension/courant alternatifs, de réduire le niveau d'harmoniques provoqué par les convertisseurs dans l'alimentation et/ou dans la charge.

Il existe un besoin de simplifier les procédés et dispositifs connus de commande des interrupteurs de cellules de commutation.

Un mode de réalisation pallie tout ou partie des inconvénients des procédés connus de commande d'interrupteurs de cellule de commutation.

Un mode de réalisation pallie tout ou partie des inconvénients des dispositifs connus de commande d'interrupteurs de cellule de commutation.

Un mode de réalisation pallie tout ou partie des inconvénients des convertisseurs connus, en particulier des convertisseurs à découpage.

Un mode de réalisation prévoit une cellule de commutation ayant un rendement de conversion plus élevé que celui des cellules de commutation connues.

Un mode de réalisation prévoit une cellule de commutation selon la revendication 1.

D'autres modes de réalisation sont définis dans les revendications dépendantes 2 à 7.

Un mode de réalisation prévoit un convertisseur à découpage comprenant au moins un dispositif tel que défini ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente de manière schématique une cellule de commutation du type auquel s'appliquent les modes de réalisation décrits ;
la figure 2 représente, sous forme de chronogrammes schématiques, des exemples de signaux de commande de la cellule de la figure 1 ;
la figure 3 représente, de manière schématique, un mode de réalisation d'une cellule de commutation comprenant un dispositif de commande ;
la figure 4 représente, de manière schématique, l'allure d'une intégrale d'un courant dans un interrupteur de la cellule de commutation de la figure 3 en fonction d'une valeur de temps mort de commutation ;
la figure 5 représente, sous forme de chronogrammes schématiques, un exemple de courants et tensions dans un interrupteur de la cellule de commutation de la figure 3 ;
la figure 6 représente, sous forme de chronogrammes schématiques, un autre exemple de courants et tensions dans un interrupteur de la cellule de commutation de la figure 3 ;
la figure 7 représente, sous forme de chronogrammes schématiques, encore un autre exemple de courants et tensions dans un interrupteur de la cellule de commutation de la figure 3 ;
la figure 8 représente, de manière schématique, un mode de réalisation d'un capteur de courant du dispositif de commande de la figure 3 ;
la figure 9 représente, de manière schématique, un mode de réalisation d'un circuit de la cellule de commutation de la figure 3 ;
la figure 10 représente, sous forme de chronogrammes schématiques, l'allure d'un courant et de signaux du circuit de la figure 9 ;
la figure 11 représente, sous forme de chronogrammes schématiques, un exemple de fonctionnement de la cellule de commutation de la figure 3 comprenant les circuits des figures 8 et 9 ;
la figure 12 représente, de manière partielle et schématique, un autre mode de réalisation d'un circuit de la cellule de commutation de la figure 3 ;
la figure 13 représente, de manière schématique, un mode de réalisation d'une partie du circuit de la figure 9 ou de la figure 12 ;
la figure 14 représente, de manière schématique, un mode de réalisation d'une autre partie du circuit de la figure 12 ; et
la figure 15 représente, de manière schématique, un mode de réalisation d'encore une autre partie du circuit de la figure 8.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les convertisseurs auxquels s'appliquent les modes de réalisation décrits ne sont pas détaillés, les modes de réalisation décrits étant compatibles avec les convertisseurs usuels comprenant des cellules de commutation à deux interrupteurs commandés. De plus, des circuits de commande rapprochée (en anglais "driver"), configurés pour appliquer des signaux de commande à des interrupteurs d'une cellule de commutation, ne sont pas détaillés, les modes de réalisation décrits étant compatibles avec de tels circuits usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

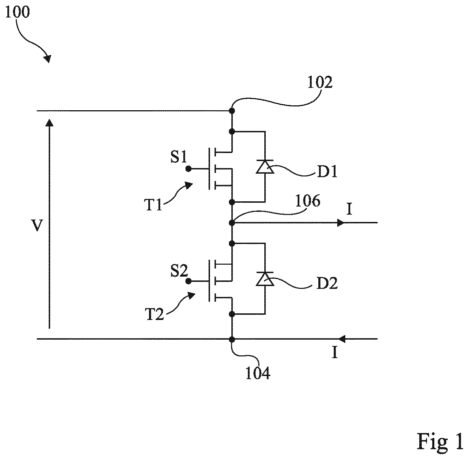

La figure 1 représente, de manière schématique, une cellule de commutation 100 du type auquel s'appliquent les modes de réalisation décrits.

La cellule de commutation 100 comprend deux interrupteurs T1 et T2. Les interrupteurs T1 et T2 peuvent être tout type d'interrupteur commandé adapté à former une cellule de commutation. De préférence, les interrupteurs T1 et T2 sont des transistors à effet de champ de type MOS à canal N. En variante, les transistors MOS sont à canal P. Dans d'autres variantes, les interrupteurs sont du type transistor bipolaire ou du type transistor bipolaire à grille isolée, IGBT (en anglais "Isolated Gate Bipolar Transistor"). Chaque interrupteur peut également comprendre plusieurs interrupteurs élémentaires électriquement en parallèle. De préférence, les interrupteurs élémentaires sont similaires ou identiques. Par identique, on entend ici identique à des tolérances de fabrication près. Les interrupteurs élémentaires peuvent être des transistors de type MOS (en variante, de type bipolaire). Les transistors d'un même interrupteur T1, T2 ont alors leurs bornes de source (en variante, leurs bornes d'émetteur) connectées les unes aux autres et leurs bornes de drain (en variante, leurs bornes de collecteur) connectées les unes aux autres. Le nombre d'interrupteurs élémentaires peut être quelconque.

Les interrupteurs T1 et T2 sont électriquement en série entre des bornes, ou noeuds, 102 et 104. Plus précisément, un noeud 106 relie, de préférence connecte, les interrupteurs T1 et T2 entre eux. L'interrupteur T1 a des bornes de conduction couplées, de préférence connectées, respectivement aux noeuds 102 et 106, et l'interrupteur T2 a des bornes de conduction couplées, de préférence connectées, respectivement aux noeuds 106 et 104. Par borne de conduction, on entend les bornes de l'interrupteur entre lesquelles une connexion électrique est établie lorsque l'interrupteur est à l'état passant, par exemple les bornes de drain/source ou, en variante, de collecteur/émetteur. L'état passant ou bloqué de chaque interrupteur T1 et T2 est commandé par un signal de commande, respectivement S1 et S2. Les signaux S1 et S2 sont appliqués à des bornes de commande respectives des interrupteurs, par exemple à une borne de grille ou, en variante, une borne de base. Les signaux S1 et S2 peuvent être appliqués de manière différentielle entre la borne de commande et une borne de conduction, par exemple entre la borne de commande et une borne de source ou, en variante, entre la borne de commande et la borne d'émetteur. Les signaux S1 et S2 peuvent être mis à des niveaux compatibles avec les niveaux de tension des interrupteurs.

L'interrupteur T2 comprend, de préférence, une diode D2 reliant les bornes de conduction de l'interrupteur T2. Dans l'exemple représenté, la diode D2 a sa cathode reliée, de préférence connectée, au noeud 106 et son anode reliée, de préférence connectée, au noeud 104. Plus préférentiellement, l'interrupteur T1 comprend également une diode D1 reliant les bornes de conduction de l'interrupteur T1. Dans l'exemple représenté, la diode D1 a sa cathode reliée, de préférence connectée, au noeud 102 et son anode reliée, de préférence connectée, au noeud 106. De préférence, les diodes D1 et D2 sont des diodes dites intrinsèques (en anglais "body diode"), plus précisément, chaque diode D1, D2 est définie par une jonction PN entre des régions semiconductrices dopées du transistor respectif T1, T2. Par jonction PN, on entend une interface entre deux régions semiconductrices dopées de types de conductivité opposés N et P. Ces deux régions peuvent être en contact direct ou par l'intermédiaire d'une région intrinsèque, c'est-à-dire une région non dopée ou non volontairement dopée.

Chaque diode D1, D2 peut être constituée d'une seule diode, ou de plusieurs diodes élémentaires en parallèle, de préférence similaires ou identiques. Plus précisément, les diodes élémentaires de chaque diode D1, D2 ont des bornes de cathode connectées les unes aux autres, et des bornes d'anode connectées les unes aux autres. Les diodes élémentaires sont de préférence les diodes intrinsèques des interrupteurs élémentaires connectés en parallèle. Ainsi, le nombre de diodes élémentaires peut être quelconque.

Dans l'exemple représenté, la cellule de commutation 100 reçoit une tension V positive entre les bornes 102 et 104 de l'association en série des interrupteurs T1 et T2. Dans cet exemple, la cellule de commutation 100 fournit un courant I sortant du noeud de connexion 106 entre les interrupteurs T1 et T2. Encore dans cet exemple, le courant I revient dans le noeud 104. Cet exemple n'est pas limitatif, la tension pouvant être une tension négative, et/ou le courant I pouvant également être un courant entrant dans le noeud de connexion 106 et, par exemple, sortant par le noeud 104. De plus, la cellule de commutation peut comprendre plus de deux interrupteurs en série, commandés selon un cycle répété à la fréquence de découpage, les interrupteurs étant dans chaque cycle à tour de rôle seul à l'état passant. La fréquence de découpage peut être fixe, c'est-à-dire constante, ou variable.

La cellule de commutation 100 est typiquement comprise dans un convertisseur, de préférence à découpage. Le convertisseur peut comprendre seulement la cellule de commutation 100. Le convertisseur peut également comprendre en outre d'autres cellules de commutation, de préférence similaires ou identiques à la cellule de commutation 100. Les cellules de commutation sont alors, par exemple, en parallèle entre les bornes 102 et 104, ces bornes étant communes aux cellules de commutation. A titre d'exemple, les cellules de commutation en parallèle constituent un pont en H ou, par exemple, un pont triphasé. Chaque cellule de commutation constitue alors une branche du pont en H ou, par exemple, du pont triphasé.

Le convertisseur n'est pas décrit ici en détails, les modes de réalisation décrits étant compatibles avec les convertisseurs usuels à découpage comprenant une ou des cellules de commutation à interrupteurs commandés. La tension V peut être une tension d'entrée ou de sortie du convertisseur. La tension V peut également être celle aux bornes d'un élément capacitif, non représenté, interne au convertisseur. Le courant I peut être un courant d'entrée ou sortie du convertisseur. Le courant I peut également être un courant circulant dans un élément inductif, non représenté, interne au convertisseur.

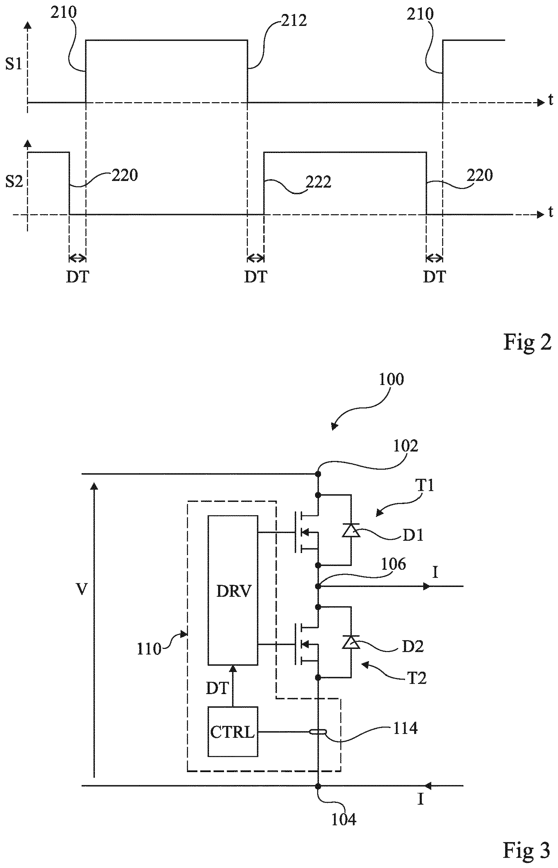

La figure 2 représente, sous forme de chronogrammes schématiques, des exemples des signaux de commande S1 et S2 de la cellule de la figure 1, représentés en fonction du temps t.

Chacun des signaux S1 et S2 a un niveau bas et un niveau haut. Les niveaux bas et haut du signal S1 commandent les états respectifs bloqué et passant de l'interrupteur T1. Autrement dit, lorsque le signal S1 est à son niveau bas, respectivement à son niveau haut, l'interrupteur T1 est commandé à l'état bloqué, respectivement passant. De la même manière, lorsque le signal S2 est à son niveau bas, respectivement à son niveau haut, l'interrupteur T2 est commandé à l'état bloqué, respectivement passant. Pour chacun des signaux, les niveaux bas et haut peuvent être échangés, par exemple si les interrupteurs T1 et T2 sont des transistors MOS à canal P ou des interrupteurs à nitrure de gallium, GaN, de type normalement fermé (en anglais "normally ON").

Chacun des signaux S1 et S2 est un signal en créneaux répétés à la fréquence de découpage, c'est-à-dire que chaque signal présente une succession de cycles et prend alternativement ses niveaux bas et haut dans chaque cycle. Plus précisément, le signal S1 comprend des fronts montants 210 entre les niveaux bas et haut du signal S1, et des fronts descendants 212 entre les niveaux haut et bas du signal S1. Le signal S2 comprend des fronts descendants 220 entre les niveaux haut et bas du signal S2, et des fronts montants 222 entre les niveaux bas et haut du signal S2. Dans l'exemple représenté, les fronts sont abrupts, c'est-à-dire que la durée des fronts est inférieure à environ 1 % de la durée séparant les fronts montants successifs. En variante, les fronts ne sont pas abrupts. Par exemple, chaque front comprend des passages par un ou plusieurs niveaux intermédiaires situés entre les niveaux bas et haut. Le signal concerné est maintenu à chaque niveau intermédiaire pendant une partie de la durée du front. Dans la présente description, on appelle dans ce cas instant d'un front l'instant auquel le signal concerné passe par une valeur prédéfinie, par exemple un niveau intermédiaire correspondant à un seuil de tension des interrupteurs.

Un temps de cycle de commutation est défini par le temps qui sépare des fronts montants successifs ou les fronts descendants successifs de l'un des signaux, par exemple le signal S1. Le temps séparant deux fronts successifs est constant pour une fréquence de découpage constante et variable pour une fréquence de découpage variable.

Un rapport cyclique de commutation est défini par le rapport entre la durée du niveau haut de l'un des signaux pris comme référence, par exemple le signal S1, et la durée d'un cycle de commutation. Le rapport cyclique varie en fonctionnement dans une plage comprise entre 0 et 1 en fonction de valeurs de courant/tension dans le convertisseur. Dans l'exemple représenté, le rapport cyclique est de l'ordre de 0,5. Le réglage du rapport cyclique en fonction des valeurs de courant/tension du convertisseur n'est pas décrit ici en détail, les modes de réalisation décrits étant compatibles avec les procédés usuels de réglage du rapport cyclique d'une cellule de commutation d'un convertisseur.

Comme mentionné en préambule, lorsque l'un des signaux S1 et S2 est à son niveau haut, l'autre signal est à son niveau bas. Plus précisément, lorsque le signal S1 est à son niveau haut après un front montant 210, le signal S2 est à son niveau bas après un front descendant 220 précédent ce front montant 210. Un temps mort ayant une durée égale à une valeur DT est situé entre chaque front descendant 220 et le front montant 210 suivant. Un temps mort est défini par une période pendant laquelle les deux signaux de commande S1 et S2 commandent simultanément l'état bloqué des transistors T1 et T2. Le temps mort est répété à chaque commutation, c'est-à-dire à chaque passage de l'état passant de l'un des interrupteurs à l'état passant de l'autre des interrupteurs. La valeur de temps mort DT correspond à la durée de cette période répétée. De même, lorsque le signal S2 est à son niveau haut après un front montant 222, le signal S1 est à son niveau bas après un front descendant 212 précédent ce front montant 222. Un temps mort, ayant par exemple une durée égale à la valeur DT, est situé entre chaque front descendant 212 et le front montant 222 suivant.

Après chaque front descendant 212, 220, l'interrupteur T1, T2 commandé par le signal S1, S2 concerné est commandé à l'état bloqué, mais cet interrupteur passe à l'état pleinement bloqué après un délai après le front. Ce délai dépend principalement de l'interrupteur et d'un circuit qui applique le signal S1, S2 à la borne de commande de l'interrupteur. Ainsi, les temps morts permettent d'éviter que les deux interrupteurs T1 et T2 soient momentanément passants simultanément.

La figure 3 représente, de manière schématique, un mode de réalisation d'une cellule de commutation 100. La cellule de commutation 100 correspond à celle de la figure 1 à laquelle est ajouté un dispositif de commande 110 des deux interrupteurs T1, T2 de la cellule de commutation 100.

Les signaux de commande S1 et S2 des interrupteurs respectifs T1 et T2 sont fournis par le dispositif de commande 110. Le dispositif de commande 110 comprend un circuit DRV, appelé circuit de commande rapprochée (en anglais "driver"). Le circuit DRV est configuré pour appliquer les signaux S1 et S2 aux bornes de commande des interrupteurs respectifs T1 et T2.

Selon le présent mode de réalisation, le dispositif de commande 110 comprend un capteur de courant 114 configuré pour mesurer un courant traversant l'interrupteur T2. Ainsi, le capteur de courant 114 est en série avec l'interrupteur T2 entre les noeuds 104 et 106. Dans l'exemple représenté, le capteur relie le noeud 104 à l'interrupteur T2. Dans un autre exemple, non représenté, le capteur 114 relie l'interrupteur T2 au noeud 106. En fonctionnement, le capteur 114 mesure le courant dans l'interrupteur T2 et fournit une valeur de mesure, autrement dit une valeur résultant de la mesure. Dans d'autres modes de réalisation, en particulier si le courant I est entrant dans le noeud 106, le capteur de courant 114 peut être configuré pour mesurer un courant traversant l'interrupteur T1. Ces autres modes de réalisation correspondent, par exemple, au présent mode de réalisation, dans lequel les rôles des interrupteurs T1 et T2 sont inversés.

Le dispositif de commande 110 comprend en outre un circuit de commande CTRL (en anglais "control circuit") relié, de préférence connecté, au capteur 114. En fonctionnement, le circuit de commande CTRL détermine une valeur DT de temps mort de commutation et fournit cette valeur au circuit DRV.

Le temps mort de commutation est réglé en fonctionnement. Ce réglage du temps mort est effectué en fonction d'une mesure, fournie par le capteur 114, du courant circulant dans l'interrupteur T2 lorsque le signal S2 commande l'état bloqué, c'est-à-dire commande l'état non passant, de l'interrupteur T2. Par réglage de temps mort, on entend l'ajustement de la valeur de temps mort DT, c'est-à-dire que le réglage consiste à faire varier la valeur de temps mort DT, de préférence à partir d'une valeur initiale, afin de mettre au point le fonctionnement de la cellule de commutation. La valeur initiale peut être toute valeur de temps mort usuelle, et/ou, de préférence, une valeur obtenue au cours de tests pour mettre au point la cellule de commutation. Les tests de mise au point ne sont pas détaillés ici, les modes de réalisation décrits étant compatibles avec les tests de mise au point d'une cellule de commutation usuellement effectués pour obtenir une valeur de temps mort. Comme ceci est détaillé ci-après, le fait de régler le temps mort en fonction du courant circulant dans l'interrupteur T2 commandé à l'état bloqué permet, en particulier, d'améliorer le rendement de la cellule de commutation, et de simplifier son fonctionnement.

En variante, la durée séparant chaque front descendant 212 (figure 2) du front montant 222 (figure 2) suivant a une valeur différente de la valeur DT et définit une autre valeur de temps mort. Cette autre valeur de temps mort peut alors être ajustée de manières similaires à celles des modes de réalisation décrits pour ajuster la valeur de temps mort DT à partir d'une mesure du courant dans l'interrupteur T2 et/ou dans l'interrupteur T1. Ainsi, le temps mort séparant chaque front 220 (figure 2) du front 210 (figure 2) suivant et/ou le temps mort séparant chaque front 212 (figure 2) du front 222 (figure 2) suivant peuvent être réglés à partir d'une mesure du courant dans l'interrupteur T2 et/ou dans l'interrupteur T1.

Pendant le temps mort, les interrupteurs T1 et T2 risquent d'être simultanément à l'état bloqué pendant que le courant I a une valeur non nulle. Dans l'exemple représenté en figure 1, la diode D2 de l'interrupteur T2 est orientée de manière à laisser passer le courant I fourni par la cellule de commutation lorsque les deux interrupteurs T1 et T2 sont à l'état bloqué. La diode D2 est alors appelée diode de roue libre. Dans l'exemple représenté en figure 1, la diode D1 ne joue pas le rôle d'une diode de roue libre.

De préférence, le temps mort est réglé en fonction du courant circulant dans l'interrupteur qui, parmi les interrupteurs T1 et T2, joue le rôle d'une diode de roue libre. La diode de roue libre est la diode D2 dans l'exemple de la figure 1. En particulier, selon le signe de la tension V, l'orientation des diodes et le sens du courant I, la diode de roue libre peut être la diode D1. Dans une autre variante, par exemple en présence d'un courant ou d'une tension alternative, les diodes D1 et D2 peuvent jouer à tour de rôle la fonction de diode de roue libre, et on peut alors prévoir un capteur de courant tel que le capteur 114 (figure 3) pour chaque interrupteur T1, T2.

De préférence, comme ceci est illustré ci-après, la mesure du courant dans l'interrupteur T2 utilisée pour régler le temps mort est effectuée lorsque l'interrupteur T1 est commandé à l'état passant. En d'autres mots, cette mesure est effectuée au cours d'une période à laquelle l'interrupteur T1 est commandé à l'état passant, c'est-à-dire que cette période est située entre un front montant 210 (figure 2) et le front montant suivant 212. Par mesure du courant utilisée pour régler le temps mort, on entend l'ensemble des valeurs de mesure fournies par le capteur de courant 114 à l'exception d'éventuelles valeurs de mesures qui pourraient être fournies par le capteur de courant sans être utilisées pour régler le temps mort. Plus préférentiellement, la mesure du courant utilisée pour régler le temps mort est effectuée après le front montant à une période où l'interrupteur T1 permet déjà le passage d'au moins une partie du courant I fourni par le convertisseur, cette partie du courant I ne passant ainsi pas par la diode D2 de roue libre. Ainsi, la mesure du courant dans l'interrupteur T2 commandé à l'état bloqué utilisée pour régler le temps mort est effectuée en dehors du temps mort.

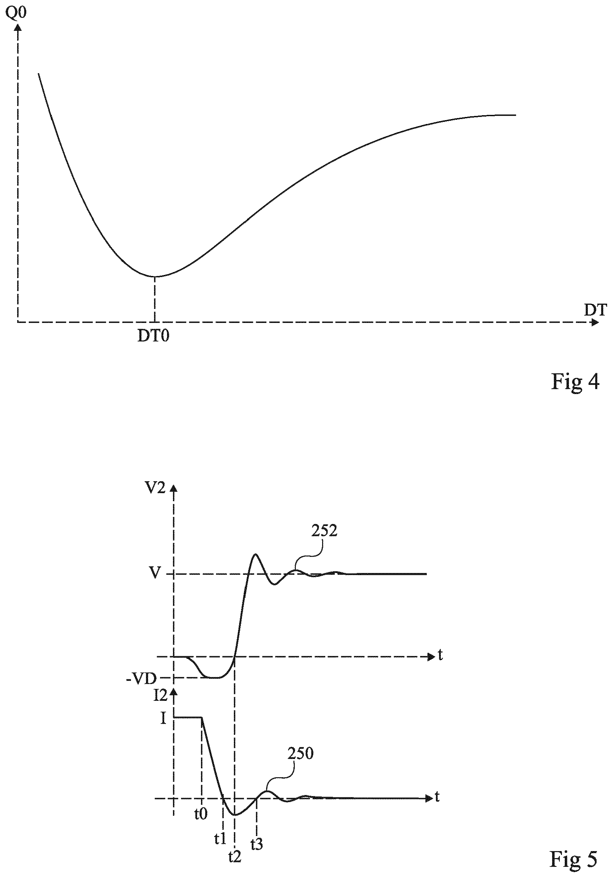

La figure 4 représente, de manière schématique, l'allure d'une intégrale Q0 d'un courant dans l'interrupteur T2 de la cellule de commutation de la figure 3 en fonction de la valeur de temps mort DT.

De préférence, le réglage du temps mort comprend la détermination d'une valeur représentative de l'intégrale Q0. L'intégrale Q0 est l'intégrale, pendant une période d'intégration, de la valeur de mesure fournie par le capteur 114 (figure 3). La valeur représentative de l'intégrale correspond ainsi à une valeur moyenne pendant la période d'intégration. L'interrupteur T2 est commandé à l'état bloqué pendant toute la période d'intégration, et, de préférence, l'interrupteur T1 est commandé à l'état passant pendant toute la période d'intégration. De préférence, la durée de la période d'intégration est prédéfinie. A titre d'exemple, la durée de la période d'intégration est comprise entre 0,1% et 50% du temps de cycle de commutation, de préférence entre 1% et 20 % du temps de cycle de commutation. La valeur représentative de l'intégrale Q0 est aussi représentative d'une charge passant par l'interrupteur T2 pendant la période d'intégration.

Les inventeurs ont remarqué que l'intégrale Q0 en fonction de la valeur de temps mort DT présente typiquement un minimum pour une valeur de temps mort DT0. De préférence, on règle alors le temps mort de sorte que sa valeur soit égale à la valeur DT0. Ainsi, le temps mort est réglé de sorte que l'intégrale Q0 soit minimale. Autrement dit, on règle le temps mort de sorte qu'une valeur représentative de l'intégrale Q0, c'est-à-dire toute valeur qui varie de manière monotone (croissante ou décroissante) en fonction de l'intégrale Q0, présente un extremum. Plus particulièrement, l'extremum est un minimum dans le cas où la valeur représentative de Q0 varie de manière monotone et croissante en fonction de Q0 (par exemple en utilisant un intégrateur non-inverseur), et l'extremum est un maximum dans le cas où la valeur représentative de Q0 varie de manière monotone et décroissante en fonction de Q0 (par exemple en utilisant un intégrateur inverseur).

Pour cela, à titre d'exemple, on met en oeuvre une détermination itérative de l'extrémum. L'algorithme de recherche itérative d'extrémum n'est pas détaillé ici, les modes de réalisation décrits étant compatibles avec les algorithmes usuels de recherche itérative d'extrémum. De préférence, les interrupteurs T1 et T2 sont choisis pour que l'intégrale Q0 présente un minimum unique. Cependant, en particulier lorsque les interrupteurs T1 et T2 sont composés chacun de plusieurs interrupteurs élémentaires, il peut arriver que l'intégrale Q0 présente plusieurs minima. Dans ce cas, on utilise de préférence un algorithme usuel de recherche itérative d'extrémum global en présence de plusieurs extréma.

Les figures 5, 6 et 7 représentent, sous forme de chronogrammes schématiques, des exemples d'allures de la tension V2 aux bornes de l'interrupteur T2 et du courant I2 traversant l'interrupteur T2. Plus précisément, les exemples des figures 5, 6 et 7 correspondent à trois valeurs de temps mort DT différentes. Les chronogrammes représentent très schématiquement les allures de la tension V2 et du courant I2 en fonction du temps t au cours d'une commutation, avant et après un instant t0 du front montant du signal S1.

Dans l'exemple de la figure 5, la valeur de temps mort DT est relativement élevée, c'est-à-dire supérieure à la valeur DT0 correspondant au minimum de l'intégrale Q0 de la figure 4.

Avant l'instant t0, l'interrupteur T1 est bloqué. Le courant I (figure 3) fourni par la cellule de commutation circule dans l'interrupteur T2 en direction du noeud 106 (figure 3) de connexion entre les interrupteurs T1 et T2. A partir de l'instant t0, l'interrupteur T2 est commandé à l'état passant. Le courant I2 dans l'interrupteur T2 diminue alors à mesure que le courant dans l'interrupteur T1 augmente. Le courant I2 s'annule à un instant t1.

Du fait que la valeur de temps mort DT est relativement élevée, une partie du courant I2 passe par la diode de roue libre D2 (figure 3). Ceci rend négative la tension V2 aux bornes de l'interrupteur T2. Par exemple, lorsque la valeur du temps mort est suffisamment longue, la tension V2 se rapproche d'une valeur de seuil -VD de la jonction PN de la diode D2 polarisée en direct.

Après l'instant t1, le courant I2 prend une valeur négative, c'est-à-dire que le courant I2 circule dans l'interrupteur T2 en provenance de l'interrupteur T1. Le courant I2 décharge alors la capacité due à la jonction PN de la diode D2. Lorsque, à un instant t2, cette capacité est déchargée, la tension V2 s'annule. Ainsi, la charge qui passe par l'interrupteur T2 entre les instants t1 et t2 comprend au moins une charge QREC liée à la capacité de la jonction PN.

Après l'instant t2, la tension V2 rejoint, à des chutes de tension près dans l'interrupteur T1 et dans ses connexions, la valeur de la tension V aux bornes de la cellule de commutation, correspondant à la situation où l'interrupteur T1 est pleinement passant. Pour cela, le courant I2 est négatif et apporte une charge QOSS à la structure semiconductrice de l'interrupteur T2, typiquement pour former des zones de charge d'espace dans des régions semiconductrices de l'interrupteur, au moins jusqu'à ce que la tension V2 ait environ, c'est-à-dire aux chutes de tension évoquées ci-dessus près, la valeur de la tension V. Des oscillations amorties 250 et 252 respectives du courant I et de la tension V se produisent respectivement autour de la valeur nulle et autour d'environ la valeur de la tension V. Ces oscillations sont liées à la capacité de l'interrupteur, qui contient la charge QOSS, et à des inductances parasites de la cellule de commutation. Ainsi, le courant I2 s'annule à un instant t3 postérieur à l'instant t2, et devient positif après l'instant t3 avant d'osciller à nouveau.

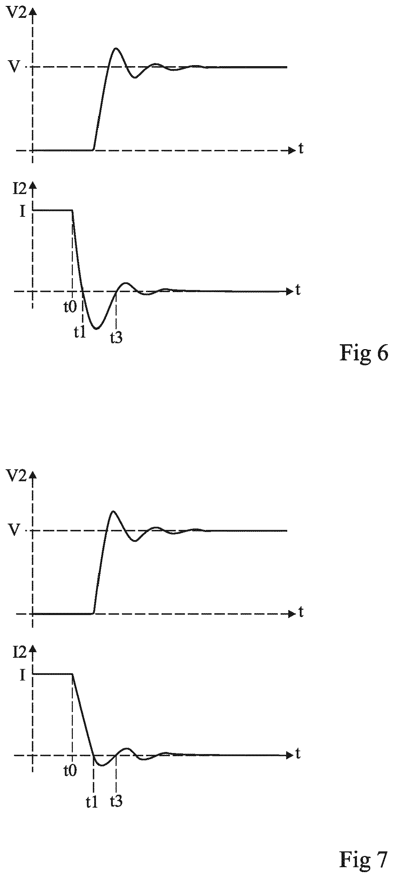

Dans l'exemple de la figure 6, la valeur de temps mort DT est relativement faible, c'est-à-dire inférieure à la valeur DT0 correspondant au minimum de l'intégrale Q0 de la figure 4.

Après l'instant t0, comme en figure 5, le courant I2 dans l'interrupteur T2 diminue à mesure que le courant dans l'interrupteur T1 augmente. Le courant I2 dans l'interrupteur T2 s'annule à un instant t1.

Du fait que la valeur du temps mort est relativement faible, l'interrupteur T2 est encore passant lorsque l'interrupteur T1 devient passant. Ainsi, un courant IADD circule simultanément dans les interrupteurs T1 et T2 (courant I2 négatif). Après l'instant t1, une charge QADD passe ainsi simultanément par les interrupteurs T1 et T2. Lorsque l'interrupteur T2 est suffisamment bloqué, la tension V2 rejoint la valeur de tension V aux bornes de la cellule de commutation d'une manière similaire à celle de la figure 5, et la charge QOSS s'ajoute à la charge QADD. En particulier, le courant I2 s'annule à l'instant t3, et devient positif après l'instant t3 avant d'osciller à nouveau de manière amortie.

Dans l'exemple de la figure 7, la valeur de temps mort DT est proche de la valeur DT0 correspondant au minimum de l'intégrale Q0 de la figure 4.

Après l'instant t0, comme en figures 5 et 6, le courant I2 dans l'interrupteur T2 diminue à mesure que le courant dans l'interrupteur T1 augmente. Le courant I2 dans l'interrupteur T2 s'annule à un instant t1.

En comparaison avec la valeur de temps mort relativement élevée de l'exemple de la figure 5, la valeur de temps mort DT proche de la valeur DT0 ne laisse pas le temps à la diode D2 d'entrer pleinement en conduction. La valeur plus faible de l'intégrale Q0 peut être expliquée par le fait que la charge QREC fournie pour décharger la capacité de la diode D2 est plus faible. Du fait que la diode D2 n'est pas entrée pleinement en conduction, on évite des pertes d'énergie dues à la circulation du courant dans la diode D2 et à la chute de tension -VD dans la diode D2. En effet, la chute de tension aux bornes de l'interrupteur T2 lorsque celui-ci est à l'état passant est inférieure à la chute de tension aux bornes de l'interrupteur T2 lorsque le courant passe par la diode D2. Ceci permet notamment d'augmenter le rendement énergétique de la cellule de commutation, et également le rendement énergétique d'un convertisseur comprenant une telle cellule de commutation.

En outre, en comparaison avec la valeur de temps mort relativement élevée de l'exemple de la figure 5, la valeur de temps mort DT proche de la valeur DT0 est plus faible, ce qui permet d'augmenter la plage de variations du rapport cyclique de commutation. Ceci permet à la cellule de commutation de fonctionner pour des rapports cycliques plus proches de 0 ou de 1 que pour les valeurs de temps mort relativement élevées. Les rapports cycliques proches de 0 ou de 1 adressent des cas particuliers des tension/courant en entrée/sortie du convertisseur. Ceci est plus particulièrement avantageux lorsque la cellule de commutation est comprise dans un convertisseur recevant une tension alternative. Dans ce cas, la fréquence de la tension alternative est inférieure à la fréquence de commutation, de sorte que la tension alternative est sensiblement constante pendant la durée d'un cycle de commutation. Le rapport cyclique se rapproche de 0 ou de 1 lorsque la tension change de signe entre deux alternances. Augmenter la plage de variations du rapport cyclique permet alors, par exemple, de réduire des harmoniques dans le courant consommé par le convertisseur, dus aux changements de signe de tension alternative entre les alternances. Il peut aussi arriver que le rapport cyclique se rapproche de 0 ou de 1 lorsque la tension alternative prend, en valeur absolue, des valeurs proches d'une valeur maximum au milieu d'une alternance. Ceci peut se produire lorsque cette valeur maximum est proche d'une tension aux bornes d'une charge, non représentée, à laquelle le courant I est fourni. De manière similaire, ceci permet de réduire les harmoniques d'un convertisseur fournissant une tension alternative.

En comparaison avec la valeur de temps mort relativement faible de l'exemple de la figure 6, la valeur de temps mort DT proche de la valeur DT0 laisse le temps à l'interrupteur T2 d'être suffisamment bloqué pour limiter ou éviter le courant IADD circulant simultanément dans les deux interrupteurs T1 et T2. La valeur plus faible de l'intégrale Q0 peut être expliquée par le fait que la valeur QADD est ainsi réduite ou nulle. Du fait que le courant IADD circulant simultanément dans les deux interrupteurs est réduit ou évité, les pertes d'énergie dues à ce courant sont réduites ou évitées. Ceci permet ainsi d'augmenter le rendement énergétique de la cellule de commutation, et également le rendement énergétique d'un convertisseur comprenant une telle cellule de commutation.

En outre, lorsque la valeur de temps mort est relativement faible, le courant IADD circulant en même temps dans les deux interrupteurs T1 et T2 constitue un pic de courant absorbé par la cellule à chaque commutation. Ce pic de courant répété est source d'harmoniques dans le courant absorbé. Réduire ou éviter ce courant permet de réduire ou d'éviter des harmoniques dans le courant absorbé.

Ainsi, régler le temps mort de sorte que sa valeur DT soit proche de, de préférence égale à, la valeur DT0 pour laquelle l'intégrale Q0 est minimale, permet d'augmenter le rendement énergétique de la cellule de commutation, et/ou de simplifier le fonctionnement de la cellule de commutation pour les rapports cycliques proches de 0 ou de 1, et/ou de limiter un niveau d'harmoniques.

En pratique, les durées mises par les interrupteurs pour passer de l'état passant à l'état bloqué, ainsi que les caractéristiques des interrupteurs T1 et T2 comprenant les diodes D1 et D2, telles que leurs capacités, dépendent de paramètres de fonctionnement tels que, par exemple, la tension V aux bornes de la cellule de commutation, le courant I fourni par la cellule de commutation, et la température de fonctionnement. La valeur DT0 varie alors en fonction des paramètres de fonctionnement.

Le fait de régler le temps mort au cours du fonctionnement permet de faire varier la valeur du temps mort lorsque les paramètres de fonctionnement changent, de manière à améliorer le rendement énergétique et réduire le niveau d'harmoniques pour tous les paramètres de fonctionnement. En particulier, dans un convertisseur recevant ou fournissant une tension alternative, on peut prévoir que, lors du réglage, la durée de réglage, définie entre le début du réglage et l'obtention d'une valeur de temps mort proche de la valeur DT0, soit inférieure au temps mis par la tension alternative pour varier significativement au cours d'une alternance. Par rapport à une durée de réglage plus longue, ceci permet une augmentation supplémentaire du rendement énergétique, et/ou une simplification supplémentaire pour les rapports cycliques proches de 0 et de 1, et/ou une limitation supplémentaire de niveau d'harmoniques.

De préférence, la durée d'intégration débute à l'instant t1 où le courant I2 dans l'interrupteur T2 s'annule. Autrement dit, la durée d'intégration débute à un instant où la valeur fournie par le capteur de courant 114 (figure 3) est représentative d'une valeur nulle du courant traversant l'interrupteur T2. En variante, la durée d'intégration débute avant ou après l'instant t1, par exemple lorsque la valeur du courant I2 franchit un seuil. Cependant, par rapport à cette variante, l'intégrale Q0 débutant à l'instant t1 permet encore une amélioration supplémentaire du rendement énergétique et/ou encore une limitation supplémentaire de niveau d'harmoniques.

De préférence, la durée d'intégration est égale à une durée entre annulations successives du courant traversant l'interrupteur T2. Autrement dit, lorsque l'intégration débute à l'instant t1, la période d'intégration se termine à l'instant t3. Ceci permet d'éviter de prendre en compte la charge circulant dans l'interrupteur T2 au cours des oscillations. Par rapport à une variante dans laquelle la durée d'intégration est supérieure à la durée entre les instants t1 et t3, c'est-à-dire entre les annulations successives du courant circulant dans l'interrupteur T2, ceci permet une amélioration supplémentaire du rendement énergétique et/ou une limitation supplémentaire de niveau d'harmoniques.

Bien que, dans les exemples des figures 5 à 7, la diode D2 soit à jonction PN, la diode D2 peut être remplacée par tout autre type de diode, par exemple, une diode Schottky. L'homme du métier est alors en mesure, à partir des explications des figures 5 à 7, de déterminer les caractéristiques des interrupteurs, et en particulier une capacité parasite de l'interrupteur lorsque la diode D2 est polarisée en direct, pour lesquelles l'intégrale Q0 présente un minimum.

Bien que, dans les modes de réalisation décrits ci-dessus en relation avec les figures 4 à 7, le temps mort soit réglé de sorte que sa valeur DT soit proche de la valeur DT0, ceci n'est pas limitatif. En particulier, dans une variante, on ajuste la valeur de temps mort DT de sorte que la pente de l'intégrale Q0 en fonction du temps mort ait une valeur prédéfinie. De préférence, la valeur prédéfinie correspond à une pente négative, c'est-à-dire une diminution de l'intégrale Q0 lorsque le temps mort augmente. Dans cette variante, l'intégrale Q0 peut alors ne pas présenter de minimum. Dans cette variante, lorsque l'intégrale Q0 présente un minimum, on peut obtenir une valeur de temps mort inférieure à la valeur DT0. Par rapport à une valeur de temps mort proche de la valeur DT0, ceci permet une augmentation supplémentaire de la plage de variations du rapport cyclique, et donc une simplification supplémentaire du convertisseur pour les rapports cycliques proches de 0 ou 1 et/ou une limitation supplémentaire de niveau d'harmoniques.

En outre, bien que, dans les modes de réalisation décrits ci-dessus en relation avec les figures 4 à 7, le temps mort soit réglé en fonction d'une valeur représentative de l'intégrale Q0, ceci n'est pas limitatif. En variante, on peut obtenir une amélioration du rendement énergétique et/ou une simplification du fonctionnement pour les rapports cycliques proches de 0 ou de 1, et/ou une limitation de niveau d'harmoniques par d'autres manières de régler le temps mort en fonction de la mesure du courant circulant dans l'interrupteur T2 commandé à l'état bloqué. Par exemple, l'intégration peut être remplacée par toute étape permettant de déterminer en fonction de la valeur DT une valeur permettant de distinguer entre elles les allures, telles que représentées en figures 5 à 7, du courant en fonction du temps lorsque l'interrupteur T2 est bloqué, et, de préférence, lorsque l'interrupteur T1 est passant.

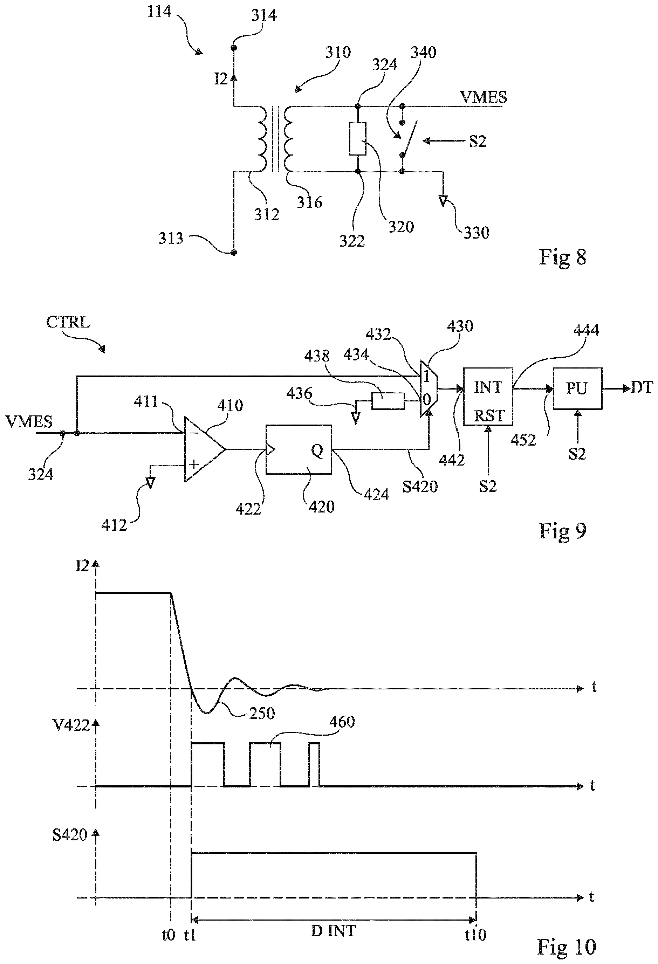

La figure 8 représente, de manière schématique, un mode de réalisation du capteur de courant 114 du dispositif de commande de la figure 3.

Le capteur de courant 114 comprend ici un capteur de type magnétique. De préférence, le capteur de type magnétique comprend, plus préférentiellement est constitué par, un transformateur 310. Le transformateur 310 comprend un enroulement 312. L'enroulement 312 est relié, de préférence connecté, en série avec l'interrupteur T2 (figure 3). Pour cela, l'enroulement 312 a une borne 313 reliée, de préférence connectée, à la borne 102 (figure 3) ou au noeud 106 (figure 3) de la cellule de commutation, et une autre borne 314 reliée, de préférence connectée, à une borne de conduction de l'interrupteur T2.

Le transformateur 310 comprend en outre un enroulement 316. De préférence, le capteur 114 comprend une résistance 320 reliant entre elles les bornes de l'enroulement 316. La résistance 320 fournit, entre ses bornes 324 et 322, une valeur de tension VMES représentative du courant I2 circulant dans l'interrupteur T2. Les bornes 322 et 324 constituent des bornes de sortie du capteur. La valeur de tension VMES est par exemple référencée par rapport à un potentiel de référence tel que celui d'une masse 330. La masse 330 est alors reliée, de préférence connectée, à la borne 322 de la résistance 320.

En variante, le transformateur 310 peut être remplacé par un autre type de capteur de courant, par exemple de type résistif (en anglais "shunt"), de type Rogowski ou de type sonde à effet Hall. Cependant, par rapport à cette variante, le transformateur est plus facile à mettre en oeuvre et/ou a une réponse plus rapide. Une réponse plus rapide permet d'obtenir un réglage plus précis du temps mort.

De préférence, un interrupteur 340 relie les bornes 322 et 324 de sortie du capteur. Dans un exemple l'interrupteur 340 est commandé par le signal S2 de commande de l'interrupteur T2. Ainsi, l'interrupteur 340 met l'enroulement secondaire 316 en court-circuit lorsque l'interrupteur T2 est commandé à l'état passant. Dans une variante, on omet l'interrupteur 340, et la mesure de courant est effectuée en continu. Par rapport à une telle variante, l'interrupteur 340 permet d'éviter de saturer le transformateur 310. Selon un avantage, la mesure est enclenchée uniquement par la commande de l'interrupteur T2 dont on mesure le courant. Selon un autre avantage, l'interrupteur 340 a le temps, en particulier au cours du temps mort, de devenir pleinement passant avant le début de la période à laquelle la mesure de courant est utilisée pour régler le temps mort.

Dans un autre exemple, l'interrupteur 340 est commandé par l'inverse du signal S1 de l'interrupteur T1. Par rapport à une commande par le signal S2, cet autre exemple permet de réduire encore le risque de saturation du transformateur.

La figure 9 représente, de manière schématique, un mode de réalisation du circuit CTRL du dispositif de commande 110 de la figure 3.

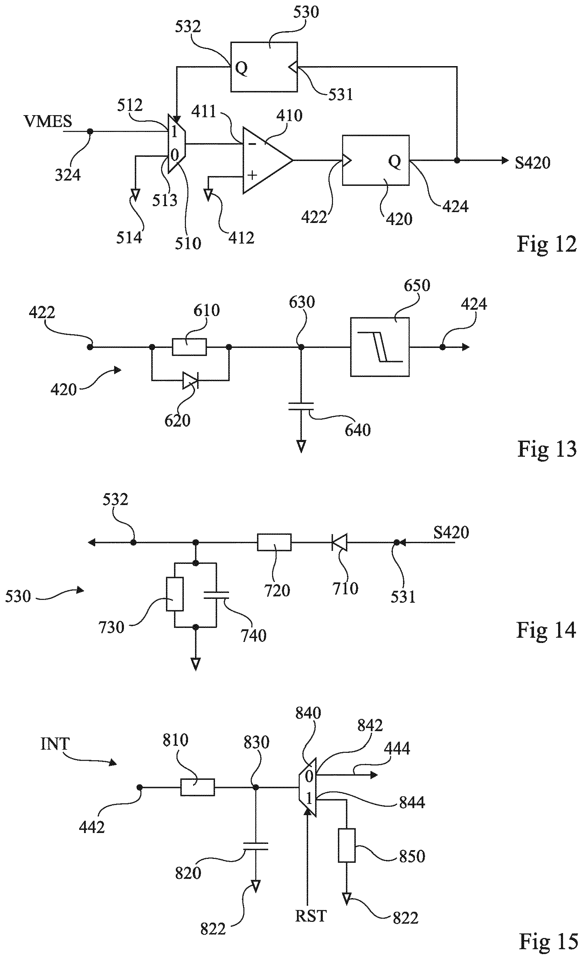

Le circuit CTRL comprend un circuit comparateur 410. Le circuit comparateur 410 a une entrée 411, par exemple une entrée inverseuse (-) reliée, par exemple connectée, à la sortie 324 du capteur 114 (figure 8), fournissant la valeur VMES. En d'autres mots, le dispositif de commande 110 comprend une liaison, par exemple une connexion, entre la sortie 324 et l'entrée 411. La liaison peut être directe (c'est-à-dire que la sortie 324 et l'entrée 411 sont connectées entre elles) ou par l'intermédiaire d'un ou plusieurs autres éléments. Cet autre élément peut être un interrupteur ou, comme ceci est décrit ci-après en relation avec la figure 12, un multiplexeur. Une autre entrée, par exemple une entrée non inverseuse (+), du circuit comparateur 410 est reliée, de préférence connectée, à un noeud 412 d'application d'un potentiel fixe, par exemple un noeud défini par la masse. En variante, le circuit comparateur 410 est configuré pour comparer la valeur VMES à la valeur d'un potentiel différent de celui de la masse. De préférence, la valeur du potentiel du noeud 412 est représentative d'un courant nul dans le capteur 114. Le circuit comparateur 410 peut comprendre, de préférence être constitué par, un comparateur ou tout autre circuit configuré pour effectuer une comparaison, tel que, par exemple, un amplificateur opérationnel monté en comparateur.

Le circuit CTRL comprend en outre un circuit monostable 420. Le circuit monostable 420 a une entrée de déclenchement 422 reliée, de préférence connectée, à une sortie du circuit comparateur 410. Le circuit monostable 420 fournit, sur une sortie 424 (Q), un signal S420. Le signal S420 est utilisé de la manière décrite ci-après pour définir une période pendant laquelle la mesure du courant est utilisée pour régler le temps mort, par exemple la période pendant laquelle la valeur mesurée est intégrée pour obtenir une valeur représentative de l'intégrale Q0. En variante, pour que l'intégration débute à l'instant t1 (figures 5 à 7) et se termine à l'instant t3 (figures 5 à 7), on peut prévoir un circuit spécifique configuré pour déterminer un instant où le circuit comparateur 410 génère un front descendant et stopper l'intégration à cet instant.

Le circuit CTRL comprend en outre un multiplexeur 430 commandé par le signal S420. Le multiplexeur 430 a une entrée 432 (1) reliée, de préférence connectée, à la sortie 324 du capteur 114 (figure 8). Le multiplexeur a une autre entrée 434 (0), par exemple reliée par une résistance 438 à un noeud 436 d'application d'un potentiel fixe, par exemple la masse. La résistance 438 a préférentiellement une valeur élevée, c'est-à-dire supérieure à 100 kOhm. L'entrée 434 peut être flottante, c'est-à-dire non reliée.

Le circuit CTRL comprend en outre un circuit intégrateur INT. Le circuit intégrateur INT a une entrée 442 reliée, de préférence connectée, à une sortie du multiplexeur 430. Le circuit intégrateur INT comprend une entrée RST de remise à zéro recevant le signal S2 de commande de l'interrupteur T2. En fonctionnement, le circuit intégrateur INT détermine une valeur représentative de l'intégrale d'un signal appliqué sur son entrée 442. Cette valeur représentative est fournie sur une sortie 444 du circuit intégrateur INT. Cette valeur représentative de l'intégrale est remise à zéro lorsque le signal S2 est à son niveau haut. En variante, le multiplexeur 430 est remplacé par un interrupteur commandé reliant entre eux les noeuds 432 et 442.

Le circuit intégrateur INT est de préférence choisi pour que la valeur de l'intégrale déterminée par le circuit intégrateur INT reste inchangée lorsque le signal S420 sélectionne l'entrée 434 du multiplexeur 430. Par entrée sélectionnée d'un multiplexeur, on entend, parmi les entrées du multiplexeur, celle dont le potentiel est appliqué par le multiplexeur à la sortie du multiplexeur, par exemple celle qui est connectée par le multiplexeur à la sortie du multiplexeur. A titre d'exemple, pour un circuit intégrateur tel que celui décrit ci-après en relation avec la figure 15, le fait que la résistance 438 ait une valeur élevée ou que l'entrée 434 soit flottante permet que la valeur de l'intégrale déterminée par le circuit intégrateur INT reste inchangée, à l'échelle de temps de la mesure effectuée, lorsque le signal S420 sélectionne l'entrée 434 du multiplexeur 430. En variante, le potentiel appliqué à l'entrée 434 peut prendre toute valeur permettant, lorsque cette valeur est appliquée à l'entrée d'un circuit intégrateur, de laisser inchangée la valeur d'intégrale déterminée par ce circuit intégrateur.

Le circuit CTRL comprend en outre un circuit de traitement PU. Le circuit de traitement PU a une entrée 452 reliée, de préférence connectée, à la sortie 444 du circuit intégrateur INT. Le circuit de traitement PU reçoit par exemple le signal S2 de commande de l'interrupteur T2. Le circuit de traitement est par exemple configuré pour que son fonctionnement soit synchronisé par le signal S2. Le circuit de traitement PU est configuré pour mettre en oeuvre un algorithme de réglage, de préférence, un algorithme de minimisation. Pour cela, à titre d'exemple, le circuit de traitement PU comprend une unité de stockage de valeurs analogiques et/ou des bascules et/ou une mémoire, et une unité de traitement analogique, par exemple formée de circuits analogiques comprenant des comparateurs et des portes logiques. Le circuit de traitement PU peut également comprendre un convertisseur analogique numérique relié à la sortie 444 du circuit intégrateur, et une unité numérique de traitement séquentiel de données telle qu'un microprocesseur ou un réseau de portes programmables in situ FPGA (en anglais "Field-programmable gate array"). Le circuit de traitement PU peut être constitué par tout circuit usuel adapté à mettre en oeuvre un algorithme usuel de minimisation.

La figure 10 représente, sous forme de chronogrammes schématiques, l'allure du courant I2 et de signaux du circuit de la figure 9. Plus précisément, la figure 10 illustre le fonctionnement du circuit comparateur 410 et du circuit monostable 420 décrits en relation avec la figure 9, lorsque le courant I2 dans l'interrupteur T2 a une des allures décrites en relation avec les figures 5 à 7.

Le circuit comparateur 410 fournit un signal V422. Le signal V422 est à un niveau logique bas lorsque la valeur VMES est supérieure à la valeur du potentiel fixe du noeud 412 (figure 9), cette valeur étant de préférence nulle. Le signal V422 peut également être à un niveau logique bas lorsque la valeur VMES est nulle aux incertitudes près de la mesure. Ainsi, pour le capteur de courant 114 choisi, le circuit comparateur 410 fournit le niveau logique bas lorsque le courant I2 dans l'interrupteur T2 est positif, c'est-à-dire de même sens que lorsque l'interrupteur T1 est bloqué. Le circuit comparateur 410 fournit un niveau logique haut lorsque la valeur VMES est inférieure à celle du potentiel fixe du noeud 412. En particulier, la sortie du circuit comparateur passe au niveau logique haut à l'instant t1 d'annulation du courant I2. Par exemple, le circuit comparateur 410 fournit ensuite un créneau 460 à chaque oscillation 250 (figures 5 à 7) du courant I2.

Le circuit monostable 420 est déclenché lorsque le circuit comparateur 410 génère un front montant entre ses niveaux logiques bas et haut de sortie. Le signal S420 de sortie du circuit monostable 420 est à un niveau bas avant déclenchement. Un déclenchement se produit ainsi à l'instant t1. Après déclenchement, le signal S420 reste à un niveau haut pendant une durée DINT, prédéfinie, jusqu'à un instant t10. Par exemple, le circuit monostable est monocoup, c'est-à-dire non redéclenchable, et la durée DINT est ainsi indépendante du nombre des créneaux 460 et de leurs durées.

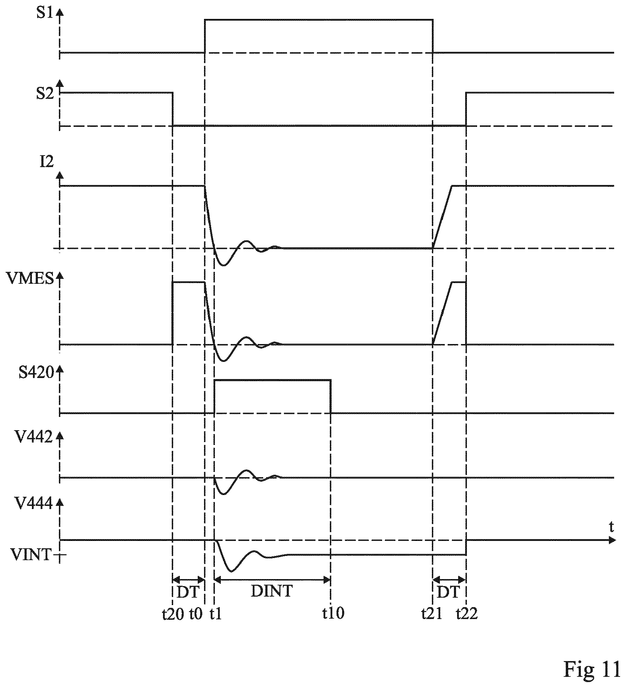

La figure 11 représente, sous forme de chronogrammes schématiques, un exemple de fonctionnement de la cellule de commutation de la figure 3. Plus précisément, la figure 11 représente l'allure en fonction du temps t des signaux de commande S1 et S2, du courant I2, du potentiel VMES, du signal S420 et de valeurs de potentiel V442 et V444, dans le cas où le dispositif de commande 110 comprend les circuits des figures 8 et 9. La valeur V442 est celle qui est reçue par le circuit intégrateur INT sur son entrée 442. La valeur V444 est celle qui est fournie par le circuit intégrateur INT sur sa sortie 444. Les chronogrammes représentent un cycle de commutation de la cellule de commutation.

Au début du cycle représenté, le signal S2 de commande de l'interrupteur T2 est à son niveau haut, le signal de commande S1 est à son niveau bas et le courant I2 est égal au courant I fourni par la cellule de commutation. Du fait que l'interrupteur 340 (figure 8) est passant, la valeur VMES est égale à zéro. Le signal S420 est à un niveau bas, ce qui provoque la sélection de l'entrée 434 du multiplexeur 430. Ainsi, la valeur V442 est une valeur ne modifiant pas, ou ne modifiant pas sensiblement, l'intégrale fournie par le circuit intégrateur. La valeur V444 est nulle du fait que l'entrée RST du circuit intégrateur INT est activée.

A un instant t20, le signal S2 passe à son niveau bas. L'interrupteur T2 est alors commandé à l'état bloqué. En outre, selon un mode de réalisation, le courant I2 est mesuré à partir de cet instant, du fait de l'ouverture de l'interrupteur 340 (figure 8). Le potentiel VMES passe alors à une valeur représentative du courant I2. Les signaux S1, S2 et S420, et le courant I2 ont ensuite les allures décrites précédemment en relation avec les figures 5 à 7 et 10, jusqu'à l'instant t10. Le potentiel VMES a alors la même allure que le courant I2.

Entre les instants t1 et t10, le signal S420 est au niveau haut, ce qui provoque la sélection de l'entrée 432 du multiplexeur 430. Selon un mode de réalisation, la valeur V442 reçue par le circuit intégrateur INT est alors la valeur VMES. Ainsi, la valeur V442 présente des oscillations amorties et s'annule après ces oscillations. La valeur V444 fournie par le circuit intégrateur INT oscille également et se stabilise ensuite à une valeur VINT représentative de l'intégrale Q0. De préférence, la durée DINT est choisie suffisamment longue pour que les oscillations soient environ terminées, de préférence terminées, à l'instant t10.

A un instant ultérieur t21, un temps mort débute par le passage du signal S1 à son niveau bas. Ce temps mort se termine à l'instant t22 par le passage du signal S2 à son niveau haut. Dans l'exemple représenté, le temps mort est de sorte que le courant I2 passe dans la diode D2 entre les instants t21 et t22. Cependant, après réglage du temps mort, selon les modes de réalisation décrits ci-dessus, le courant I2 n'a pas le temps de passer dans la diode D2.

La valeur VINT est conservée par le circuit intégrateur INT jusqu'à l'instant t22. Le circuit de traitement PU mémorise la valeur VINT avant l'instant t22. A partir de l'instant t22, le signal S2 reçu par le circuit intégrateur INT sur son entrée RST provoque la remise à zéro de l'intégrale. La valeur V444 s'annule, et un nouveau cycle commence.

Ainsi, le circuit de traitement PU mémorise la valeur VINT à chaque cycle, de manière synchronisée, par le signal S2 dans l'exemple représenté. La synchronisation peut être effectuée par tout autre signal adapté à provoquer la mémorisation de la valeur VINT par l'unité de traitement PU à chaque cycle. En variante, les valeurs mémorisées sont séparées de plusieurs cycles, ce qui permet de ralentir le circuit de traitement et ainsi de réduire son coût et/ou de le simplifier. Cependant, par rapport à cette variante, le fait de mémoriser la valeur VINT à chaque cycle présente l'avantage d'accélérer le réglage du temps mort pendant le fonctionnement de la cellule de commutation. Moins le temps de cycle de commutation est choisi petit par rapport à un temps de variation des paramètres de fonctionnement du convertisseur, tel que, par exemple, un temps de cycle d'une tension alternative, plus accélérer le réglage du temps mort est avantageux.

Le circuit de traitement PU recherche par itérations la valeur de temps mort DT correspondant au minimum de l'intégrale Q0. Par exemple, chaque itération correspond à un cycle de commutation. Pour cela, le circuit de traitement PU stocke au moins trois valeurs VINT1, VINT2, VINT3 représentatives de l'intégrale Q0 obtenues, de préférence lors de trois cycles de commutation précédents, pour trois valeurs respectives de temps mort.

A chaque itération, à partir des valeurs VINT1, VINT2, VINT3 stockées, le circuit de traitement détermine s'il doit augmenter ou diminuer la valeur de temps mort DT. A titre d'exemple, des signaux internes, non représentés, DT+ et DT-, par exemple binaires, sont déterminés par le circuit de traitement, et sont activés si la valeur de temps mort DT doit être respectivement augmentée ou diminuée. Le circuit de traitement ajuste la valeur DT en fonction de ces signaux. En variante, le circuit DRV (figure 3) est configuré pour recevoir les signaux DT+ et DT- en provenance du circuit de traitement PU, et ajuste la valeur DT en fonction de ces signaux.

En variante, tout algorithme de minimisation peut être utilisé. De préférence, l'algorithme est choisi de sorte que le nombre d'itérations pour obtenir une valeur de temps mort DT sensiblement égale à la valeur DT0 (figure 4), en partant d'une valeur initiale de temps mort telle que définie ci-dessus en relation avec la figure 3, est inférieur à 50, de préférence inférieur à 10. Ceci permet de conserver le point de fonctionnement optimal lors de variations du courant et/ou de la tension reçue/fournie par la cellule de commutation, par exemple lorsque la tension V et/ou le courant I sont alternatifs. Dans un exemple, les signaux DT+ et DT- ne sont pas binaires, mais prennent des valeurs analogiques représentatives des différences VINT1-VINT2 et VINT1-VINT3 entre la valeur VINT1 et les valeurs respectives VINT2 et VINT3. Ceci permet d'obtenir le minimum plus rapidement qu'avec des signaux DT+ et DT- binaires.

La figure 12 représente, de manière partielle et schématique, un mode de réalisation d'un circuit de la cellule de commutation de la figure 3. Plus précisément, le mode de réalisation représenté ici partiellement correspond à une variante d'une partie du circuit de la figure 9.

La liaison entre l'entrée 411 du circuit comparateur 410 et la sortie 324 du capteur 114 (figure 8) comprend un multiplexeur 510. Autrement dit, le multiplexeur 510 relie l'entrée 411 à la sortie 324. Plus précisément, le multiplexeur 510 a une entrée 512 (1) reliée à la sortie 324 et une sortie reliée à l'entrée 411 du circuit comparateur 410. Le multiplexeur 510 a une entrée 513 (0) reliée, de préférence connectée, à un noeud 514 d'application d'un potentiel fixe. Le potentiel fixe du noeud 514 peut être supérieur, environ égal, ou égal, au potentiel fixe du noeud 412. De préférence, le noeud 514 est relié, de préférence connecté, à la masse. De préférence, les noeuds 412 et 514 sont un noeud commun défini par la masse.

Un circuit monostable 530 a une entrée de déclenchement 531 reliée à la sortie 424 du circuit monostable 420. Le circuit monostable 530 commande le multiplexeur 510 par un signal fourni sur une sortie 532 (Q). En fonctionnement, le déclenchement du circuit monostable 420 provoque le déclenchement du circuit monostable 530. Le signal fourni par le circuit monostable 530 reste au niveau haut pendant une durée DMONO (non représentée) avant de revenir au niveau bas. La durée DMONO est supérieure à la durée DINT de niveau haut du signal S420. Lorsque le signal fourni par le circuit monostable 530 est au niveau haut, l'entrée 513 du multiplexeur 510 est sélectionnée, ce qui empêche que le comparateur fournisse des créneaux 460 (figure 10). Ceci permet d'éviter qu'une nouvelle période d'intégration DINT démarre après un éventuel créneau 460. Ceci permet aussi de réduire la durée DINT (figure 10) afin qu'elle soit inférieure à la durée pendant laquelle le courant I2 présente des oscillations amorties.

La figure 13 représente, de manière schématique, un mode de réalisation du circuit monostable 420 du circuit CTRL de la figure 9 ou de sa variante de la figure 12.

Selon ce mode de réalisation, le circuit monostable 420 comprend une résistance 610 et une diode 620 électriquement en parallèle entre l'entrée de déclenchement 422 et un noeud 630. La diode 620 a son anode tournée vers l'entrée 422. Un condensateur 640 relie le noeud 630 à un noeud d'application d'un potentiel fixe, par exemple la masse. Le circuit monostable 420 comprend en outre un circuit 650 de déclenchement à hystérésis reliant le noeud 630 à la sortie 424 du circuit monostable 420. Les valeurs de la résistance 610 et du condensateur 640, et les valeurs de seuil du circuit 650 sont choisies pour obtenir le fonctionnement décrit en relation avec la figure 10.

Un mode de réalisation particulier du circuit monostable 420 est décrit ci-dessus en relation avec la figure 13, cependant, le circuit monostable 420 peut être constitué par tout circuit monostable configuré pour fonctionner de la manière décrite en relation avec la figure 10.

La figure 14 représente, de manière schématique, un mode de réalisation du circuit monostable 530 de la figure 12.

Selon ce mode de réalisation, le circuit monostable 530 comprend une diode 710 et une résistance 720 électriquement en série entre l'entrée 531 et la sortie 532 du circuit monostable 530. La diode a son anode tournée du côté de l'entrée 531 du circuit monostable 530. Dans l'exemple représenté, la diode 710 est du côté de l'entrée 531 et la résistance est du côté de la sortie 532, l'inverse étant également possible. Le circuit monostable comprend en outre une résistance 730 et un condensateur 740 électriquement en parallèle entre le noeud de sortie 532 et un noeud d'application d'un potentiel fixe, par exemple la masse.

En fonctionnement, la mise au niveau haut du signal S420 provoque la charge du condensateur 740 à travers la diode 710 et la résistance 720, ce qui provoque la sélection de l'entrée 513 (figure 12) du multiplexeur 510. Le retour du signal S420 au niveau bas marque le début d'une diminution du potentiel du noeud de sortie 532, le condensateur 740 se déchargeant à travers la résistance 730. L'entrée 512 du multiplexeur 510 est sélectionnée à partir d'un instant où le potentiel du noeud de sortie 532 franchit un seuil interne à ce multiplexeur. Les valeurs de la résistance 730 et du condensateur 740 sont choisies en fonction de ce seuil pour que la durée entre le passage du signal S420 au niveau haut et l'instant de franchissement du seuil soit égale à la durée DMONO souhaitée décrite en relation avec la figure 12.

Un mode de réalisation particulier du circuit monostable 530 est décrit ci-dessus en relation avec la figure 14, cependant, le circuit monostable 530 peut être constitué par tout circuit monostable configuré pour fonctionner de la manière décrite en relation avec la figure 12.

La figure 15 représente, de manière schématique, un mode de réalisation du circuit intégrateur INT du circuit de la figure 9. Selon ce mode de réalisation, le circuit intégrateur INT est utilisé de préférence lorsque l'entrée 434 (figure 9) du multiplexeur 430 (figure 9) est flottante.

Selon ce mode de réalisation, le circuit intégrateur INT comprend une résistance 810 et un condensateur 820 en série entre l'entrée 442 et un noeud 822 d'application d'un potentiel fixe, de préférence la masse. Plus précisément, un noeud 830 est relié à l'entrée 442 par la résistance 810 et au noeud 822 par le condensateur 820. Un multiplexeur (démultiplexeur), ou commutateur, 840, a une borne de commande reliée, de préférence connectée, à l'entrée de remise à zéro RST. Le multiplexeur 840 a une entrée reliée, de préférence connectée, au noeud 830. Le multiplexeur 840 a une sortie 842 (0) reliée, de préférence connectée, à la sortie 444 du circuit intégrateur INT. Le multiplexeur 840 a une sortie 844 (1) reliée au noeud 822 par une résistance 850.

En fonctionnement, lorsque que le potentiel appliqué à l'entrée RST est au niveau bas, le multiplexeur 840 relie, de préférence connecte, la sortie 444 du circuit intégrateur INT au noeud 830. La résistance 810 et le condensateur 820 constituent alors un filtre passe bas fournissant sur le noeud 830 une valeur filtrée représentative de l'intégrale Q0. Lorsque le potentiel appliqué à l'entrée RST est au niveau haut, le condensateur 820 est déchargé à travers la résistance 850. L'homme du métier est en mesure de déterminer, à partir en particulier des caractéristiques de la cellule de commutation et de ses paramètres de fonctionnement, les valeurs du condensateur 820 et de la résistance 810 permettant d'obtenir un niveau de tension souhaité en entrée du circuit de traitement PU.

Un mode de réalisation particulier du circuit intégrateur INT est décrit ci-dessus en relation avec la figure 15, cependant, le circuit intégrateur INT peut être constitué de tout circuit configuré pour fournir une valeur représentative de l'intégrale Q0. Par exemple, le circuit intégrateur INT peut comprendre un amplificateur opérationnel monté en intégrateur. Selon un autre exemple, le circuit intégrateur INT peut comprendre un convertisseur analogique-numérique et un circuit numérique. Le circuit numérique peut comprendre une unité de traitement séquentiel de données, telle qu'un microprocesseur, ou un réseau de portes programmables in situ FPGA (en anglais "Field-Programmable Gate Array"). Par rapport à un intégrateur à amplificateur opérationnel ou à circuit numérique, l'utilisation d'un filtre passe bas permet d'obtenir une valeur représentative de l'intégrale Q0 de manière simplifiée.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

Enfin, la mise en oeuvre pratique des modes de réalisation et variantes décrits est à la portée de l'homme du métier à partir des indications fonctionnelles données ci-dessus.

## Revendications

1. Cellule de commutation (100) comprenant des premier (T2) et deuxième (T1) interrupteurs reliés en série, le premier interrupteur (T2) comprenant une diode (D2), reliant des bornes du premier interrupteur (D2) et orientée de manière à laisser passer un courant (I) fourni ou reçu par la cellule de commutation (100) lorsque les premier (T2) et deuxième (T1) interrupteurs sont simultanément à l'état bloqué, la cellule comprenant un dispositif configuré pour mettre en oeuvre un procédé comprenant une mesure d'un courant (I2) traversant le premier interrupteur lorsque le premier interrupteur est commandé à l'état bloqué, et le réglage d'un temps mort de commutation en fonction de la mesure,
dans lequel le réglage comprend la détermination d'une valeur (VINT) représentative d'une intégrale (Q0) d'une valeur (VMES) résultant de la mesure pendant une période d'intégration, ladite valeur représentative de ladite intégrale (Q0) variant soit de manière monotone et croissante en fonction de ladite intégrale (Q0) soit de manière monotone et décroissante en fonction de ladite intégrale (Q0),
et dans lequel ledit réglage comprend la recherche d'une valeur (DT) du temps mort de commutation pour laquelle la valeur (VINT) représentative de l'intégrale (Q0) présente un minimum global lorsque ladite valeur représentative de ladite intégrale (Q0) varie de manière monotone et croissante en fonction de ladite intégrale (Q0), ou un maximum global lorsque ladite valeur représentative de ladite intégrale (Q0) varie de manière monotone et décroissante en fonction de ladite intégrale (Q0),
la cellule comprenant un capteur (114) configuré pour mesurer le courant (I2) traversant le premier interrupteur (T2),
**caractérisée en ce que** ledit dispositif comprend:
un circuit comparateur (410) et une liaison entre une entrée (411) du circuit comparateur et ledit capteur (114), une autre entrée du circuit comparateur étant reliée à un premier noeud (412) d'application d'un potentiel fixe ; un circuit monostable (420) ayant une entrée de déclenchement (422) reliée à une sortie du circuit comparateur (410) ;
un multiplexeur (430) commandé par le circuit monostable (420) et ayant une entrée (432) reliée audit capteur et une autre entrée (434) reliée par une résistance (438) à un noeud (436) d'application d'un potentiel fixe ; et
un circuit intégrateur (INT) ayant une entrée (442) reliée à une sortie du multiplexeur (430), le circuit intégrateur comprenant de préférence une résistance (810) et un condensateur (820) en série entre ladite entrée (442) du circuit intégrateur et le premier noeud ou un autre noeud (822) d'application d'un potentiel fixe.

2. Cellule selon la revendication 1, dans lequel ledit dispositif est configuré pour effectuer la mesure lorsque le deuxième interrupteur (T1) est commandé à l'état passant.

3. Cellule selon la revendication 1 ou 2, dans lequel une durée (DINT) de la période d'intégration est prédéfinie et/ou comprise entre 0,1% et 50% d'un temps de cycle de commutation, et/ou supérieure ou égale à une durée entre deux annulations successives du courant (I2) traversant le premier interrupteur (T2).

4. Cellule selon l'une quelconque des revendications 1 à 3, dans lequel la période d'intégration débute à un instant (t1) où ladite valeur résultant de la mesure (VMES) est représentative d'une valeur nulle du courant (I2) traversant le premier interrupteur (T2).

5. Cellule (100) selon l'une quelconque des revendications 1 à 4, dans laquelle ledit capteur (114) comprend un transformateur.

6. Cellule (100) selon l'une quelconque des revendications 1 à 6, comprenant un troisième interrupteur (340) reliant des bornes de sortie (322, 324) dudit capteur et commandé par une même commande (S2) que le premier interrupteur (T2).

7. Cellule selon l'une quelconque des revendications 1 à 6, dans laquelle
ladite liaison comprend un autre multiplexeur (510) ayant une entrée (512) reliée audit capteur (114) et une sortie reliée à ladite entrée (411) du circuit comparateur, ledit autre multiplexeur ayant une autre entrée (513) reliée au premier noeud (412) ou à un deuxième noeud (514) d'application d'un potentiel fixe,
la cellule comportant en outre un autre circuit monostable (530) a une entrée de déclenchement (531) reliée à la sortie (424) dudit circuit monostable (420) et commande ledit autre multiplexeur (510).

8. Convertisseur à découpage comprenant au moins une cellule (100) selon l'une quelconque des revendications 1 à 7.

## Patentansprüche

1. Schaltzelle (100), die einen ersten (T2) und einen zweiten (T1) Schalter aufweist, die in Reihe geschaltet sind, wobei der erste Schalter (T2) eine Diode (D2) aufweist, die Anschlüsse des ersten Schalters (D2) koppelt und so gerichtet ist, dass sie einen Strom (I) leitet, der von der Schaltzelle (100) geliefert oder empfangen wird, wenn sich der erste (T2) und der zweite (T1) Schalter gleichzeitig im Aus-Zustand befinden, wobei die Zelle eine Vorrichtung aufweist, die so konfiguriert ist, dass sie ein Verfahren implementiert, das das Messen eines Stroms (I2), der durch den ersten Schalter fließt, wenn der erste Schalter in den Aus-Zustand gesteuert wird, und das Einstellen einer Schalttotzeit entsprechend der Messung aufweist,
wobei das Einstellen das Bestimmen eines Wertes (VINT) aufweist, der für ein Integral (Q0) eines Wertes (VMES) repräsentativ ist, der sich aus der Messung während einer Integrationsperiode ergibt, wobei der Wert, der für das Integral (Q0) repräsentativ ist, entweder in einer monotonen und zunehmenden Weise gemäß dem Integral (Q0) oder in einer monotonen und abnehmenden Weise gemäß dem Integral (Q0) variiert,
und wobei das Einstellen das Suchen eines Wertes (DT) der Schalttotzeit aufweist, für den der für das Integral (Q0) repräsentative Wert (VINT) ein globales Minimum aufweist, wenn der für das Integral (Q0) repräsentative Wert monoton und zunehmend gemäß dem Integral (Q0) variiert, oder ein globales Maximum, wenn der für das Integral (Q0) repräsentative Wert monoton und abnehmend gemäß dem Integral (Q0) variiert,
wobei die Zelle einen Sensor (114) aufweist, der konfiguriert ist zum Messen des Stroms (I2), der durch den ersten Schalter (T2) fließt,
**dadurch gekennzeichnet, dass** die Vorrichtung Folgendes aufweist:
eine Komparatorschaltung (410) und eine Verbindung zwischen einem Eingang (411) der Komparatorschaltung und dem Sensor (114), wobei ein anderer Eingang der Komparatorschaltung mit einem ersten Knoten (412) zum Anlegen eines festen Potentials verbunden ist,
eine monostabile Schaltung (420) mit einem Triggereingang (422), der mit einem Ausgang der Komparatorschaltung (410) gekoppelt ist,
einen Multiplexer (430), der von der monostabilen Schaltung (420) gesteuert wird und einen Eingang (432) besitzt, der mit dem Sensor gekoppelt ist, und einen weiteren Eingang (434), der über einen Widerstand (438) mit einem Knoten (436) zum Anlegen eines festen Potentials gekoppelt ist, und
eine Integratorschaltung (INT) mit einem Eingang (442), der mit einem Ausgang des Multiplexers (430) gekoppelt ist, wobei die Integratorschaltung vorzugsweise einen Widerstand (810) und einen Kondensator (820) in Reihe zwischen dem Eingang (442) der Integratorschaltung und dem ersten Knoten oder einem anderen Knoten (822) zum Anlegen eines festen Potentials aufweist.

2. Zelle nach Anspruch 1, wobei die Vorrichtung so konfiguriert ist zum Durchführen der Messung, wenn der zweite Schalter (T1) in den eingeschalteten Zustand gesteuert wird.

3. Zelle nach Anspruch 1 oder 2, wobei eine Dauer (DINT) der Integrationsperiode vordefiniert ist und/oder im Bereich von 0,1 % bis 50 % einer Schaltzykluszeit liegt und/oder größer als oder gleich einer Dauer zwischen zwei aufeinanderfolgenden Nulldurchgängen des durch den ersten Schalter (T2) fließenden Stroms (I2) ist.

4. Zelle nach einem der Ansprüche 1 bis 3, wobei die Integrationsperiode zu einem Zeitpunkt (t1) beginnt, zu dem der aus der Messung (VMES) resultierende Wert repräsentativ für einen Nullwert des durch den ersten Schalter (T2) fließenden Stroms (I2) ist.

5. Zelle (100) nach einem der Ansprüche 1 bis 4, wobei der Sensor (114) einen Transformator aufweist.

6. Zelle (100) nach einem der Ansprüche 1 bis 5, aufweisend einen dritten Schalter (340), der die Ausgangsanschlüsse (322, 324) des Sensors koppelt und durch denselben Befehl (S2) wie der erste Schalter (T2) gesteuert wird.

7. Zelle nach einem der Ansprüche 1 bis 6, wobei
die Verbindung einen weiteren Multiplexer (510) aufweist, der einen mit dem Sensor (114) gekoppelten Eingang (512) und einen mit dem Eingang (411) der Komparatorschaltung gekoppelten Ausgang aufweist, wobei der weitere Multiplexer einen weiteren Eingang (513) aufweist, der mit dem ersten Knoten (412) oder einem zweiten Knoten (514) des Anlegens eines festen Potentials gekoppelt ist,
die Zelle außerdem eine weitere monostabile Schaltung (530) mit einem Triggereingang (531) aufweist, der mit dem Ausgang (424) der monostabilen Schaltung (420) gekoppelt ist und den anderen Multiplexer (510) steuert.

8. Schaltwandler mit mindestens einer Zelle (100) nach einem der Ansprüche 1 bis 7.

## Claims

1. A switching cell (100) comprising series-coupled first (T2) and second (T1) switches, the first switch (T2) comprising a diode (D2), coupling terminals of the first switch (D2) and directed to conduct a current (I) supplied by or received from the switching cell (100) when the first (T2) and second (T1) switches are simultaneously in the off state, the cell comprising a device configured to implement a method including measuring a current (I2) flowing through the first switch when the first switch is controlled to the off state, and adjusting a switching dead time according to the measurement,
wherein the adjusting comprises determining a value (VINT) representative of an integral (Q0) of a value (VMES) resulting from the measurement during an integration period, said value representative of said integral (Q0) varying either in a monotonous and increasing manner according to said integral (Q0), or in a monotonous and decreasing manner according to said integral (Q0),
and wherein said adjusting comprises searching for a value (DT) of the switching dead time for which the value (VINT) representative of the integral (Q0) exhibits a global minimum when said value representative of said integral (Q0) monotonously and increasingly varies according to said integral (Q0), or a global maximum when said value representative of said integral (Q0) monotonously and decreasingly varies according to said integral (Q0),
the cell comprising a sensor (114) configured to measure the current (I2) flowing through the first switch (T2),
**characterized in that** said device comprises:
a comparator circuit (410) and a link between an input (411) of the comparator circuit and said sensor (114), another input of the comparator circuit being coupled to a first node (412) of application of a fixed potential;
a monostable circuit (420) having a trigger input (422) coupled to an output of the comparator circuit (410);
a multiplexer (430) controlled by the monostable circuit (420) and having an input (432) coupled to said sensor and another input (434) coupled through a resistor (438) to a node (436) of application of a fixed potential; and
an integrator circuit (INT) having an input (442) coupled to an output of the multiplexer (430), the integrator circuit preferably comprising a resistor (810) and a capacitor (820) in series between said input (442) of the integrator circuit and the first node or another node (822) of application of a fixed potential.

2. The cell according to claim 1, wherein said device is configured to perform the measurement when the second switch (T1) is controlled to the on state.

3. The cell according to claim 1 or 2, wherein a duration (DINT) of the integration period is predefined and/or in the range from 0.1% to 50% of a switching cycle time, and/or greater than or equal to a duration between two successive zero crossings of the current (I2) flowing through the first switch (T2).

4. The cell according to claim 1 to 3, wherein the integration period starts at a time (t1) when said value resulting from the measurement (VMES) is representative of a zero value of the current (I2) flowing through the first switch (T2).

5. The cell (100) according to any one claims 1 to 4, wherein said sensor (114) comprises a transformer.

6. The cell (100) according to any one claims 1 to 5, comprising a third switch (340) coupling output terminals (322, 324) of said sensor and controlled by a same command (S2) as the first switch (T2).

7. The cell according to claim 1 to 6, wherein
said link comprises another multiplexer (510) having an input (512) coupled to said sensor (114) and an output coupled to said input (411) of the comparator circuit, said other multiplexer having another input (513) coupled to the first node (412) or to a second node (514) of application of a fixed potential,
the cell further including another monostable circuit (530), which has a trigger input (531) coupled to the output (424) of said monostable circuit (420) and controls said other multiplexer (510).

8. A switched-mode converter comprising at least one cell (100) according to any of claims 1 to 7.
